# EUROPEAN PATENT APPLICATION

(11) **EP 3 360 729 A1**
(43) Date of publication of application: **15.08.2018**
(21) Application number: 17382057.2
(22) Date of filing: 08.02.2017
(51) Int. Cl.: B60Q 1/00, F21S 8/10, F21V 8/00

(54) **LIGHTING DEVICE USING NON-VISIBLE LIGHT AND METHOD FOR PRODUCING THEREOF**

(71) Applicant: Valeo Iluminacion, 23600 Martos (ES)
(72) Inventor: DUBOSC, Christophe, 93250 VILLEMOMBLE (FR); ALBOU, Pierre, 75013 PARIS (FR); MORENO, Juan-Francisco, 29620 Torremolinos (ES); CABANNE, Damien, 23600 MARTOS (ES); FERNANDEZ, Ricardo, 23600 MARTOS (ES); MOISY, Eric, 23009 JAEN (ES); PASTOR, Ramon, 23600 Martos (ES); MARTINEZ, Juan Manuel, 18014 GRANADA (ES)

(57) **Abstract**

A method for producing a lighting device (100), comprising: providing a layer (110) comprising material (111) that emits visible light (121) when irradiated with non-visible light (120); and providing a light source (102) for emitting the non-visible light (120). Also, a lighting device (100) comprising: a light source (102) configured to emit non-visible light (120); and a layer (110) comprising material (111) configured to emit visible light (121) when irradiated with the non-visible light (120).

## Description

### TECHNICAL FIELD

The present invention relates to the field of lighting devices suitable for automotive lamps, such as headlamps and tail lamps, and which, in particular, emit visible light yet comprise a light source that emits non-visible light.

### STATE OF THE ART

Lighting devices are essential for improving the visual conditions indoors and outdoors, and not only when the lighting is dim, but also when the visual conditions are almost non-existent (e.g. during nighttime).

An industry that has hugely benefitted from lighting devices is the automotive. Headlamps, tail lamps, and signaling devices allow driving vehicles when is dark or foggy outside for example, while at the same time such devices have improved the safety of other drivers: the lights increase the visibility of a vehicle and indicates the current and immediate maneuvers that are performed by the driver in order to increase the conspicuity of other drivers.

For instance, German published patent application DE10338826 A1 relates to a lamp for a motor vehicle with luminescent pigments being applied to parts of the lamp not producing or providing light. The pigments are excited with sunlight or the light from the lamp during the driving, and generate a glowing effect with the accumulated energy during those times when no light arrives to the pigments, for example at night. The glowing improves the visibility of the vehicle in low-light conditions, thereby enhancing the safety of other drivers.

Even though road vehicles require lighting systems for safe and correct driving, the lighting systems may also feature appealing designs and aesthetics for the differentiation between automotive vehicles and/or manufacturers. As such, in the past decades, other than improving the lighting devices so as to make them more efficient and functional, there has been an increasing interest in enhancing the visual aspect of the lighting devices such that they are eye-catching.

European patent publication EP1494891 B1 discloses lenses and bezels, for lamps, molded with polycarbonate and photoluminescent materials. The photoluminescent material may absorb light of particular wavelengths and, consequently, emit light of a higher wavelength. This light creates a colored visual effect at the edge of the lens.

International patent application WO03/039906 A1 discloses the use of decorative articles in a lamp. A decoration effect is provided to a lighting device in the form of a decorative article mounted on the lamp cover, either from its inside or outside. The decorative article may incorporate a light-storage layer for absorbing light from a light source, and at night an afterglow effect may be produced using the light stored in said layer. Thus both the decorative article and the afterglow effect may increase the appeal of the lamp.

In some cases, a lighting device may include a lens and/or a trim designed such that it modifies the light pattern, thereby providing an appealing visual effect. The design of the lens and/or the trim is visible even when the light source is not active, and it may be convenient, from an aesthetics point of view, to hide or not reveal said design during the periods in which no light is emitted.

There is also an interest in providing drawings, including motifs or patterns, with fine details that may enhance the aesthetics of the lighting device in general, and the light emitted by said device in particular.

### DESCRIPTION OF THE INVENTION

The method for producing a lighting device, and the lighting device disclosed in the present invention intend to solve the shortcomings of lighting devices of the prior art.

A first aspect of the invention relates to a method for producing a lighting device, comprising: providing a layer comprising material that emits visible light when irradiated with non-visible light; and providing a light source for emitting the non-visible light.

The lighting device produced with this method is capable of providing visible light without requiring a light source that emits visible light. Particularly, the lighting device is provided with a light source configured to emit non-visible light, yet the device emits visible light.

Such a lighting device may feature an appealing visual appearance owing to the reduced perception of the light source by the human eye. A person may not be able to determine whether the light source is emitting light or not, namely, is active or inactive, since no light coming from it may be detected by the eye: the light source does not cast any light components falling within the visible spectrum that could be detected by the human eye. In this regard, the light emitted by such light source is preferably comprised in the UV (ultraviolet) spectrum, that is, the light preferably features a wavelength greater than or equal to 10 nm (nanometers), and smaller than or equal to 380 nm.

The visual appearance of the device is further enhanced with the layer including the material that, upon irradiation of the non-visible light provided by the light source, emits visible light. Said material may absorb the non-visible light and re-emit it comprising light components within the visible spectrum; preferably a majority or all the re-emitted light comprises one or more wavelengths belonging to the visible spectrum. Particularly, when the non-visible light is UV light, the material is adapted to emit the light with a lower frequency or, in other words, with a longer wavelength. Both the non-visible light emitted by the light source and the visible light emitted by the material may contain more than one frequency or wavelength, thus each light beam comprises one or more frequencies or wavelengths.

Therefore, a person that inspects the lighting device while it is active may only detect the light produced by the material and not the light produced by the light source that does impinge on the material.

In some embodiments the light source may be provided within the lighting device in such a way as not to be visible to people inspecting the lighting device, neither the light beams nor light spots generated by the light source may be seen on the outer or inner surfaces of the lighting device due to the non-visible light. In these embodiments, the method further comprises providing a cover or an encasement such that it hides the light source from sight. In contrast, the casted light beams or light spots of a light source emitting visible light, even if the light source is hidden from sight with opaque components, may still be appreciated on the surfaces of the lighting device thereby revealing the existence of the light source.

In preferred embodiments of the invention, the material comprises an ink or particles reactive to the non-visible light.

Different types of ink or particles may be suitable for the material, in particular those that include substances or chemical compositions known in the art and which are reactive to the non-visible light. The ink or particles may re-emit the absorbed non-visible light as visible light, either partially or completely. In some embodiments not all the light intensity arriving to the ink or particles is then re-emitted in the form of visible light.

In preferred embodiments, the step of providing a layer comprising material that emits visible light when irradiated with non-visible light, comprises: arranging the material on the layer according to a predetermined pattern.

The predetermined pattern may be, for example but without limitation, printed on the layer having the material, or the layer cut according to said pattern if the material is already provided therewith with no design or pattern whatsoever.

In some of these preferred embodiments, the step of providing a layer comprising material that emits visible light when irradiated with non-visible light, further comprises: introducing the layer into a mold; and injecting plastic into the mold to form a light guide with the layer comprised therein.

The pattern may be provided in the lighting device by means of an in-mold decoration process such as film insert molding.

When a light guide is produced, the non-visible light irradiating the material in these embodiments may undergo total internal reflection within said light guide. Some light beams may go through the light source without impinging on the material, whereas some other beams may reflect within the light guide several times before reaching the material, in which case they are partially or completely absorbed, thus emission of visible light beams may occur.

Accordingly, including patterns (or drawings in general) featuring very delicate or detailed designs within a light guide (or some other light transmission means) is both feasible and cost-effective.

In some other preferred embodiments, the step of providing a layer comprises: introducing the layer into a mold; and injecting plastic into the mold to form a trim or a lens with the layer embedded therein.

In the embodiments in which a light guide is formed, the method may further comprise coupling the light source to the light guide. As a result, the amount of non-visible light that enters into the light guide may be increased.

In some other embodiments, the method further comprises providing a lens or a trim, and wherein the step of providing a layer comprising material that emits visible light when irradiated with non-visible light, comprises: attaching the layer to a surface of the lens or a surface of the trim.

The layer may be attached to the lens or the trim by means of, for instance, pad printing (e.g. directly printing the layer with the material on the surface of a device). The material of the attached layer may still emit visible light when it is irradiated with non-visible light.

The invention is not to be limited to providing one single layer comprising the material. Namely, in any embodiment, more than one layer comprising the material may be provided. Similarly, in any embodiment of the invention, the material in a layer may be arranged thereon in a continuous or a discontinuous form.

A second aspect of the invention relates to a lighting device comprising: a light source configured to emit non-visible light; and a layer comprising material configured to emit visible light when irradiated with the non-visible light.

In preferred embodiments, the material comprises an ink or particles reactive to the non-visible light. In some of these preferred embodiments, the material is arranged on the layer according to a predetermined pattern.

In some preferred embodiments, the lighting device further comprises a light guide, the layer being included within the light guide, and the light source being coupled to the light guide. In addition, in these embodiments, the layer is preferably included within the light guide with in-mold decoration. Further, in some of these preferred embodiments, the light guide is a transparent part.

With the layer inside a light guide, a larger amount of non-visible light emitted by the light source may be used for providing visible light. The light beams of the light source may propagate through the light guide undergoing total internal reflection until they reach a part of the material in the layer. It may occur that some light beams propagate through the entire light guide without contacting the material, in which case the beams of non-visible light may exit the light guide without generating visible light.

In some of these embodiments, a reflective surface may be provided at the end of the light guide so that said light beams, instead of being outcoupled from the light guide, may travel in the reverse direction. This way, the light beams propagate twice the length of the light guide and increase the probability of contacting the material. Moreover, the light inlet of the light guide may comprise a partially reflective material which lets the light from the light source go through but partially reflects any light beams traveling in the reverse direction.

In some embodiments, the lighting device comprises a lens, the layer being attached to a surface of the lens. Similarly, the lighting device may comprise a trim in some embodiments, in which case the layer is attached to the trim.

Another similar embodiment may comprise a lens or a trim with the layer being included therein. A film insert molding process may be used for producing a lens or a trim with the layer embedded therein.

In some embodiments, the light source comprises a light guide with an outlet for emitting the non-visible light. That is, the light source is coupled to a light guide through which the non-visible light is emitted.

A lighting device in accordance with some of these embodiments may, in fact, comprise a first light guide and a second light guide: the first light guide may have the layer included therein, whereas the light source includes the second light guide for emitting the non-visible light. Preferably, in these embodiments, the second light guide is coupled to the first light guide.

Further, similar advantages as described for the first aspect of the invention may also be applicable to the second aspect of the invention.

Another aspect of the invention relates to an automotive lamp comprising a lighting device according to the second aspect of the invention. The automotive lamp may be one of: a headlamp, and a tail lamp.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1A-1C are a lighting device in accordance with an embodiment of the invention.
Figures 2A-2C are layers in accordance with embodiments of the invention.
Figures 3A-3B are lighting devices in accordance with another embodiments of the invention.

### DESCRIPTION OF A WAY OF CARRYING OUT THE INVENTION

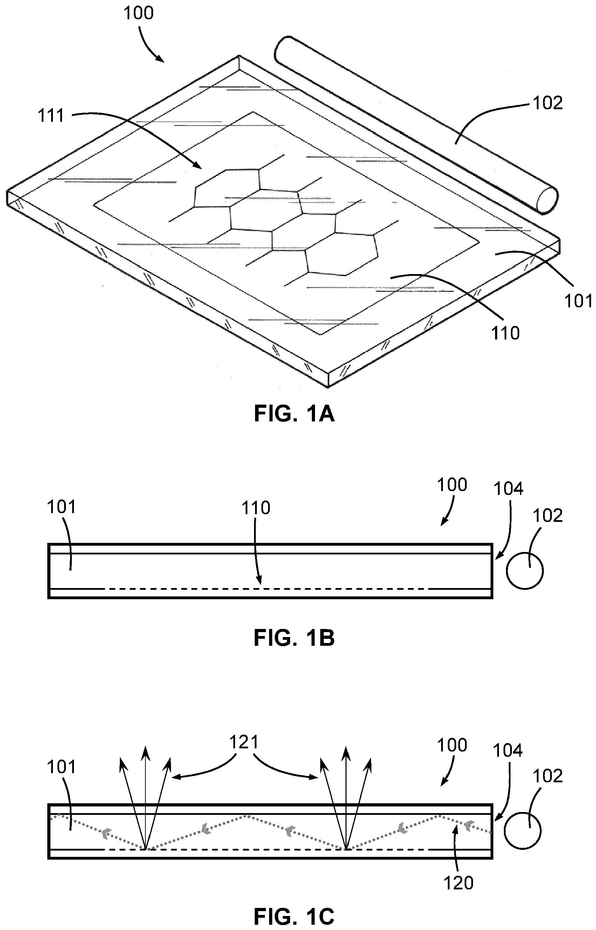

Figures 1A-1C show a lighting device 100 in accordance with an embodiment of the invention. Particularly, Figure 1A shows the lighting device 100 in a 3D perspective and Figures 1 B and 1C show the same device in a 2D perspective.

The lighting device 100 comprises light transmission means 101 through which light may propagate, a light source 102 that emits non-visible light (e.g. UV light), and a layer 110 including material 111 at least reactive to the non-visible light emitted by the light source 102. Although not necessary, the layer 110 is preferably transparent. The material 111 may include, for example but not limited to, particles, pigments and/or an ink which are/is reactive to the non-visible light.

The light source 102 is coupled to a light inlet 104 of the light transmission means 101 and may comprise, for example, one or more LEDs (that emit non-visible light), and/or a light guide with a light emitting device coupled thereto. The light guide may have one or more light outlets that is/are coupled to the light inlet 104 of the light transmission means 101.

In the lighting device 100, when the non-visible light 120 is emitted by the light source 102, the non-visible light 120 (illustrated with gray dotted lines) undergoes total internal reflection within the light transmission means 101. When light beams impinge on the material 111, part of the light intensity is absorbed by the material 111 and is then re-emitted in the form of a visible light 121 (illustrated with black solid lines); the material 111 changes the wavelength of the impinging light to a wavelength within the visible spectrum.

The visible light 121 is outcoupled from the light transmission means 101 through one or more sides of the same, or through light outlets that may be provided therewith.

In a preferred embodiment of the invention, the light transmission means 101 are a light guide (different from the light guide of the light source 102 in those embodiments in which the light source 102 comprises a light guide). In such preferred embodiment, the layer 110 is included within the light transmission means 101 with an in-mold decoration process (e.g. film insert molding).

It may be preferable, although not necessary, to arrange the light source 102 on the lighting device 100 such that the light beams it emits are substantially perpendicular to the light beams the material 111 re-emits. This arrangement may permit more easily hiding the light source 102 from sight as it could be covered with opaque components like a cover or an encasement (not illustrated) of the lighting device 100.

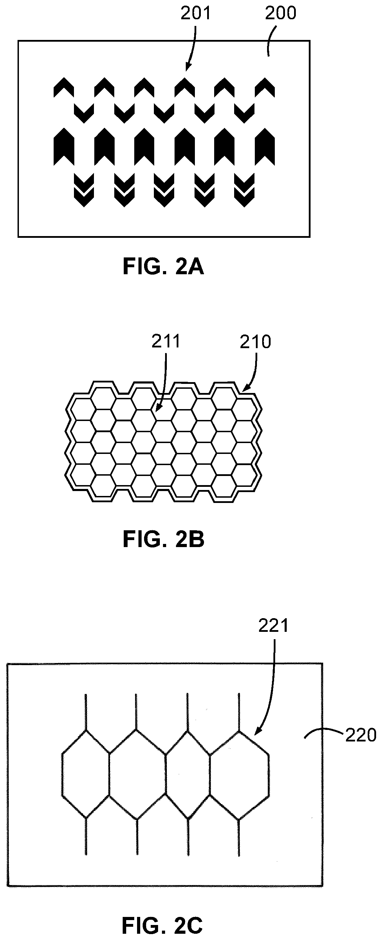

Figures 2A-2C show layers 200, 210, 220 in accordance with embodiments of the invention.

The layers 200, 210, 220 comprise material 201, 211, 221, respectively, which is arranged according to different predetermined patterns. The predetermined patterns may be conveniently designed and feature different levels of details, the amount and precision of the details being conditioned by the technique for applying the material 201, 211, 221 to the layer 200, 210, 220.

The material 201 features a discontinuous pattern, that is, a discrete number of elements is present throughout the layer 200. The material 211 of the layer 210 is hexagonally-patterned in a continuous arrangement, namely, all the hexagons are connected to each other; the thickness of the hexagons' perimeters may be as narrow or as thick as the application of the material to the layer supports. The material 221 as patterned in the layer 220 corresponds to the design included within the lighting device 100 of Figures 1A-1C, and shows differently-sized hexagons.

The layers 200, 220 do not feature the exact same shape of the material 201, 221 they comprise, whereas the layer 210 features a shape in accordance with the perimeter of the patterned material 211 comprised therein.

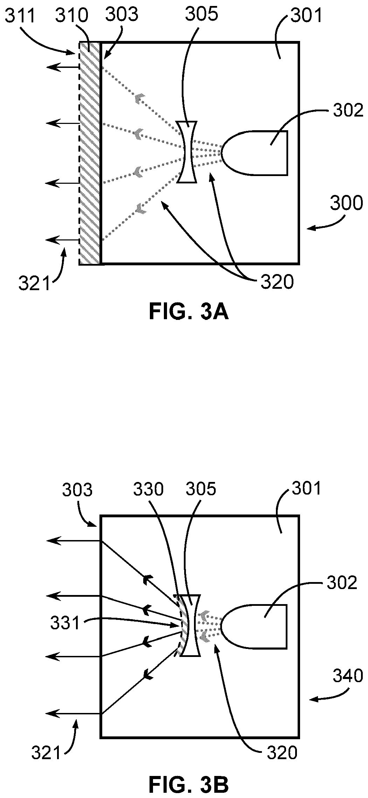

Figure 3A is a lighting device 300, represented in 2D, in accordance with another embodiment of the invention.

The lighting device 300 comprises light transmission means 301, which in this embodiment is a lamp encasement (e.g. of a headlamp or a tail lamp), a light source 302 that emits non-visible light 320, a lens 305, and an exterior lens 303. The lighting device 300 further comprises a layer 310 attached to a surface (for instance the exterior or the interior surface) of the exterior lens 303, and said layer 310 includes a material 311 that reacts to non-visible light 320 by emitting visible light 321.

The light source 302 emits the non-visible light 320 (illustrated with gray dotted lines) towards the lens 305 which, in turn, defocuses it so that it may reach almost the entire surface of the exterior lens 303. When the non-visible light 320 arrives to the exterior lens 303, the material 311 absorbs (partially or completely) the light beams impinging on it, and re-emits visible light 321 towards the exterior of the lighting device 300 (illustrated with black solid lines).

Figure 3B is a lighting device 340, represented in 2D, in accordance with another embodiment of the invention that is somewhat similar to the lighting device 300.

In contrast to the device 300 of Figure 3A, the layer 330 of the lighting device 340 is attached to the lens 305 in front of the light source 302. Accordingly, the material 331 of the layer emits visible light 321 that is directed towards the exterior lens 303.

Further, even though the light source 302 of Figures 3A and 3B is included within the light transmission means 301, in other embodiments the light source 302 of any of the devices 300, 340 is outside of said means 301. The light source 302 couples the non-visible light into the means 301 where the light then impinges on the lens 305 and/or the exterior lens 303.

In an embodiment similar to that of lighting device 300 of Figure 3A, but which is not illustrated herein, the lighting device does not comprise the lens 305 and, thus, the light emitted by the light source 302 goes directly towards the exterior lens 303 and, subsequently, to the material 311 of the layer 310.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for producing a lighting device (100, 300, 340), comprising:
providing a layer (110, 200, 210, 220, 310, 330) comprising material (111, 201, 211, 221, 311, 331) that emits visible light (121, 321) when irradiated with non-visible light (120, 320); and
providing a light source (102, 302) for emitting the non-visible light (120, 320).

2. The method of claim 1, wherein the material (111, 201, 211, 221, 311, 331) comprises an ink or particles reactive to the non-visible light (120, 320).

3. The method of any of claims 1-2, wherein providing a layer (110, 200, 210, 220, 310, 330) comprises:
arranging the material (111, 201, 211, 221, 311, 331) on the layer (110, 200, 210, 220, 310, 330) according to a predetermined pattern;
introducing the layer (110, 200, 210, 220, 310, 330) into a mold; and
injecting plastic into the mold to form a light guide with the layer (110, 200, 210, 220, 310, 330) comprised therein.

4. The method of claim 3, further comprising coupling the light source (102, 302) to the light guide.

5. The method of any of claims 1-2, further comprising providing a lens (303, 305), and wherein providing a layer (110, 200, 210, 220, 310, 330) comprises: attaching the layer (110, 200, 210, 220, 310, 330) to a surface of the lens (303, 305).

6. A lighting device (100, 300, 340) comprising:
a light source (102, 302) configured to emit non-visible light (120, 320); and
a layer (110, 200, 210, 220, 310, 330) comprising material (111, 201, 211, 221, 311, 331) configured to emit visible light (121, 321) when irradiated with the non-visible light (120, 320).

7. The lighting device of claim 6, wherein the material (111, 201, 211, 221, 311, 331) comprises an ink or particles reactive to the non-visible light (120, 320).

8. The lighting device of any of claims 6-7, wherein the material (111, 201, 211, 221, 311, 331) is arranged on the layer (110, 200, 210, 220, 310, 330) according to a predetermined pattern.

9. The lighting device of any of claims 6-8, further comprising a light guide, the layer (110, 200, 210, 220, 310, 330) being included within the light guide, and the light source (102, 302) being coupled to the light guide.

10. The lighting device of claim 9, wherein the layer (110, 200, 210, 220, 310, 330) is included within the light guide with in-mold decoration.

11. The lighting device of any of claims 9-10, wherein the light guide is a transparent part.

12. The lighting device of any of claims 6-8, further comprising a lens (303, 305), the layer (110, 200, 210, 220, 310, 330) being attached to a surface of the lens (303, 305).

13. The lighting device of any of claims 6-8, further comprising a trim, the layer (110, 200, 210, 220, 310, 330) being attached to the trim.

14. The lighting device of any of claims 6-13, wherein the light source (102, 302) comprises a light guide with an outlet for emitting the non-visible light (120, 320).

15. An automotive lamp comprising a lighting device (100, 300, 340) according to any of claims 6-14, the automotive lamp being one of: a headlamp and a tail lamp.
